# EUROPÄISCHE PATENTSCHRIFT

(11) **EP 0 770 416 B1**
(45) Veröffentlichungstag und Bekanntmachung des Hinweises auf die Patenterteilung: **21.11.2001**
(21) Anmeldenummer: 96114928.3
(22) Anmeldetag: 18.09.1996
(51) Int. Cl.: B01D 37/02, F01P 11/06

(54) **Kühlmittelfilter**
Coolant filter
Filtre d'agent refroidisseur

(30) Priorität: 28.10.1995 DE 19540251
(43) Veröffentlichungstag der Anmeldung: 02.05.1997
(73) Patentinhaber: Ing. Walter Hengst GmbH & Co. KG, 48147 Münster (DE)
(72) Erfinder: Baumann, Dieter, 48268 Greven-Gimbte (DE); Batram, Bernhard, 48268 Greven (DE); Homberger, Jörg, 73760 Ostfildern (DE)
(74) Vertreter: Schulze Horn & Partner

(56) Entgegenhaltungen:
- EP-A- 0 501 851
- US-A- 4 259 184
- US-A- 4 265 748
- US-A- 5 435 346

## Beschreibung

Die vorliegende Erfindung betrifft Kühlmittelfilter nach dem Oberbegriff der Patentansprüche 1 bis 3.

Derartige Kühlmittelfilter sind aus dem praktischen Betrieb bekannt. Sie werden für die Filterung des Kühlmittels an einem Verbrennungsmotor und zur Ergänzung des Kühlmittelzusatzes eingesetzt. Sie können als stehende und auch als hängende Gehäuse ausgebildet sein. In diese Gehäuse wird beim Service ein neuer Filtereinsatz eingesetzt. Dabei sind zweckmäßig die stabilisierenden Filterendscheiben aus einem verbrennbaren Material hergestellt und am äußeren Umfang ist ein gefaltetes Filtermedium, beispielsweise aus Papier angebracht, das sich auf einem ebenfalls verbrennbaren Innendom abstützt. In den Innenraum des Filtereinsatzes wird bei den bekannten Kühlmittelfiltern ein Kühlmittelzusatz in fester Form eingegeben, der sich bei der Durchströmung mit Kühlwasser verflüssigt und so nach einem undefinierten Zeitraum das gewünschte Mischungsverhältnis des Zusatzes im Kühlkreislauf herstellt.

Nachteilig ist bei den bekannten Kühlmittelfiltern, daß sie nur Kühlmittelzusätze in fester Form aufnehmen können. Die Zugabe von flüssigem Kühlmittelzusatz, gleichzeitig mit oder unabhängig von einem Filterwechsel, erfolgt über den Kühlerverschluß. Die exakte Dosierung übernimmt der Anwender.

Verschiedene Kühlmittelzusätze sind nur in flüssiger Form verfügbar und müssen in getrennten Verfahren in eine feste Form gebracht werden. Neuartige organisch aufbereitete Kühlmittelzusätze lassen sich derzeit nur unter Laborbedingungen in feste Form verarbeiten.

Aus der US-A-4 265 748 ist ein Filter mit einem Gehäuse bekannt, das dichtend mit einem Motorgehäuse verbindbar ist, mit einem hohlzylindrischen Filtereinsatz, der radial von außen nach innen durchströmbar ist, mit Ein- und Austrittsöffnungen, wobei der Filter im Innenraum des Filtereinsatzes eine mit einer Außenhaut allseitig geschlossene Kammer für Additive aufweist. Die Kammer ist hier stirnseitig mit Membranen verschlossen, welche sich unter Wärmeeinwirkung nach dem Verbinden des Gehäuses mit dem Motorgehäuse nach Verstreichen einer längeren Zeit öffnen. Bei dem hier beschriebenen Filter handelt es sich um einen Ölfilter, wobei die Additive erst nach einer längeren Laufzeit des zugehörigen Motors, beispielsweise etwa 10.000 km, in das öl des Ölkreislaufs eingemischt werden sollen, um die Qualität des Öls wieder aufzubessern und so einen Ölwechsel erst später erforderlich zu machen.

Auf einen Kühlmittelfilter ist diese Lehre nicht unmittelbar übertragbar, da es bei dem Kühlmittelzusatz darauf ankommmt, daß dieser möglichst bald mit dem übrigen Kühlmittel vermischt wird.

Es ist die Aufgabe der vorliegenden Erfindung, einen Kühlmittelfilter zu schaffen, mit dem der Kühlmittelzusatz in exakt dosierbarer Menge bequem und schnell in flüssiger Form in den Kühlmittelkreislauf eingebracht werden kann.

Eine erste Lösung der Aufgabe erfolgt mit einem gattungsgemäßen Kühlmittelfilter, der dadurch gekennzeichnet ist,
- daß sich mindestens ein Bereich der Außenhaut der Kammer durch Einwirken mindestens eines mechanischen Öffnungsmittels beim Verbinden des Gehäuses mit dem Motorgehäuse oder der zwei Gehäuseteile miteinander öffnet,
- daß das Öffnungsmittel mindestens ein an dem Motorgehäuse oder einem Gehäuseteil angebrachter Dorn ist und
- daß der zu öffnende Bereich durch eine Membran gebildet ist, die mit dem mindestens einen Dorn durchdringbar ist.

Dabei ist die Länge des Dorns so zu dimensionieren, daß der Weg, den die beiden Gehäuseteile zurücklegen, um miteinander verbunden zu werden, etwas größer ist als die Länge des Dorns.

Eine zweite Lösung der Aufgabe erfolgt mit einem gattungsgemäßen Kühlmittelfilter, der dadurch gekennzeichnet ist,
- daß sich mindestens ein Bereich der Außenhaut der Kammer durch Einwirken mindestens eines mechanischen Öffnungsmittels beim Verbinden des Gehäuses mit dem Motorgehäuse oder der zwei Gehäuseteile miteinander öffnet,
- daß das Öffnungsmittel mindestens ein nach außen ragender Nocken an einer stirnseitigen Wand der Kammer ist und
- daß nahe dem Nocken eine Sollbruchlinie in der stirnseitigen Wand angebracht ist, die beim Eingriff des mindestens einen Nockens mit dem benachbarten Gehäuseteil aufbricht.

In dieser alternativen Lösung ist also der Nocken an der Kammer befestigt und drückt sich in diese hinein, wenn die beiden Gehäuseteile miteinander verbunden werden.

Eine dritte Lösung der Aufgabe erfolgt mit einem gattungsgemäßen Kühlmittelfilter, der dadurch gekennzeichnet ist,
- daß sich mindestens ein Bereich der Außenhaut der Kammer durch Einwirken mindestens eines mechanischen Öffnungsmittels beim Verbinden des Gehäuses mit dem Motorgehäuse oder der zwei Gehäuseteile miteinander öffnet,
- daß das Öffnungsmittel mindestens ein an dem Motorgehäuse oder einem Gehäuseteil angebrachter Dorn und/ oder mindestens ein nach außen ragender Nocken an einer stirnseitigen Wand der Kammer ist und
- daß eine Wanddicke der Kammer nahe des Dorns oder Nockens reduziert ist.

Bei allen drei erfindungsgemäßen Ausführungen des Kühlmittelfilters wird durch die im Innenraum des hohlzylinderförmigen Filtereinsatzes vorhandene, allseitig mit einer Außenhaut umschlossene Kammer erreicht, daß der flüssige Kühlmittelzusatz vor seiner Einbringung in die Kühlflüssigkeit bequem transportier- und lagerbar ist. Dadurch, daß sich mindestens ein Bereich der Außenhaut der Kammer durch Einwirkung eines mechanischen, in den Ansprüchen 1 bis 3 näher dargelegten mechanischen Öffnungsmittels beim Verbinden des Gehäuses mit dem Motorgehäuse oder der zwei Gehäuseteile miteinander öffnet, wird die vorteilhafte Wirkung erzielt, daß die Kammer selbsttätig umgehend ihren Inhalt entläßt, ohne daß dabei eine nach außen tretende Leckage auftritt.

Vorteilhaft weist die Kammer allgemein Zylinderform mit einem Mantel und zwei Stirnseiten auf, wobei der Mantel des Zylinders als Stützdom des Filtereinsatzes ausgebildet ist und wobei mindestens eine Stirnseite einen räumlich definiert zu öffnenden Bereich aufweist. Damit wird der Raum im Inneren des Filtereinsatzes optimal nutzbar. Gleichzeitig entfällt ein separater Stützdom für den Filtereinsatz.

In einer alternativen Ausgestaltung weist die Kammer allgemein Zylinderform auf und ist in das Innere des Filtereinsatzes einsetzbar, wobei mindestens eine ihrer beiden Stirnseiten einen räumlich definiert zu öffnenden Bereich aufweist. Bei dieser Ausgestaltung ist ein Stützdom erforderlich. In jeder der beiden vorgenannten Ausgestaltungen ist die Kammer gegenüber dem Filtereinsatz in axialer Richtung verschiebbar.

In einer weiteren Ausgestaltung ist vorgesehen, daß die beiden Gehäuseteile durch ineinander schraubbare Gewindeabschnitte verbindbar sind, wobei das eine Gehäuseteil becherförmig ist und das andere Gehäuseteil die Eintrittsöffnung und die Austrittsöffnung aufweist, daß am Boden des becherförmigen Gehäuseteils Rastmittel angeordnet sind, die mit entsprechenden Rastmitteln an einer Stirnscheibe des Filtereinsatzes verbindbar sind, daß die den Rastmitteln zugewandte Stirnseite der Kammer eine Sollbruchlinie aufweist, nahe der ein nach außen ragender Nocken angeordnet ist, der beim Ineinanderschrauben der Gehäuseteile die Sollbruchlinie öffnet, und daß die den Rastmitteln abgewandte Stirnseite der Kammer eine Membran oder Sollbruchlinie aufweist und beim Ineinanderschrauben der Gehäuseteile mit einem Dorn in Eingriff bringbar ist, der an dem anderen Gehäuseteil angeordnet ist und die Membran oder Sollbruchlinie öffnet. Beim Service des Kühlmittelfilters wird der Filtereinsatz mit seinen Rastmitteln am Boden des becherförmigen Gehäuseteils eingerastet. Dann wird der becherförmige Gehäuseteil auf das andere Gehäuseteil aufgeschraubt. Durch den Einschraubweg, der in einer Ausführung z.B. 30 mm beträgt, werden die beiden Gehäuseteile einander derart angenähert und dicht verschraubt, daß sowohl der Dorn als auch der Nocken beim Eingriff mit der Membran bzw. der einen Stirnwand des Filtereinsatzes die Kammer öffnen. Dadurch ist die Kammer an beiden Stirnseiten offen und vom Kühlmittel durchströmbar, was ein unmittelbares Vermischen des flüssigen Kühlmittelzusatzes aus dem Inneren der Kammer mit dem übrigen Kühlmittel im Kühlkreislauf zur Folge hat.

In einer alternativen Ausgestaltung ist vorgesehen, daß das Gehäuse becherförmig ist und an einer der Stirnwände eine zentrale Öffnung mit Innengewinde aufweist, das auf einen entsprechenden, die Austrittsöffnung umfassenden Gewindestutzen des Motorgehäuses aufschraubbar ist, daß in der Stirnwand mindestens eine Eintrittsöffnung vorhanden ist, daß an der Stirnwand im Bereich radial außerhalb der mindestens einen Eintrittsöffnung eine Ringdichtung angebracht ist, die nach dem Anschrauben des Gehäuses dichtend am Motorgehäuse anliegt, daß die dem Gewindestutzen abgewandte Stirnseite der Kammer eine Sollbruchlinie aufweist, nahe der ein nach außen ragender Nocken angeordnet ist, der beim Aufschrauben des Gehäuses die Sollbruchlinie öffnet, und daß die andere Stirnseite der Kammer eine Membran oder Sollbruchlinie aufweist und beim Aufschrauben des Gehäuses mit einem Dorn in Eingriff bringbar ist, der an dem Gewindestutzen angeordnet ist und die Membran oder Sollbruchlinie öffnet. Die vorteilhafte Wirkung dieser Ausgestaltung ist die gleiche wie bei der vorstehend geschilderten, nur daß bei dieser Ausgestaltung ein aufschraubbares becherförmiges Gehäuse benutzt wird, das als Spin-On-Filter als solches bekannt ist.

Zweckmäßig weist die Kammer an mindestens einer ihrer Stirnseiten abstandsbildende Vorsprünge auf, deren Höhe geringer ist als die des Nockens. Dadurch ist ein guter Strömungsweg mit ausreichendem Strömungsquerschnitt geschaffen.

Die Kammer ist zweckmäßig aus Kunststoff, wodurch eine einfache Herstellung gewährleistet ist.

Weiterhin ist vorteilhaft die Membran eine Kunststoff- oder Metallfolie, wodurch ebenfalls eine einfache Herstellung gewährleistet ist.

Bevorzugt ist die Membran durch einen verdünnten Bereich der Außenhaut gebildet.

Bevorzugte Ausgestaltungen der Erfindung werden nunmehr anhand von Zeichnungen näher beschrieben. Sie zeigen in
- Figur 1: eine teilweise geschnittene Seitenansicht, in
- Figur 2: einen Schnitt durch eine andere Ausgestaltung in vergrößerter Darstellung und in
- Figur 3: einen ähnlichen Schnitt wie in Figur 2, jedoch mit einer noch anderen Ausgestaltung.
- Figur 4: einen ähnlichen Schnitt wie in Figur 3, jedoch mit einer weiteren Ausgestaltung.

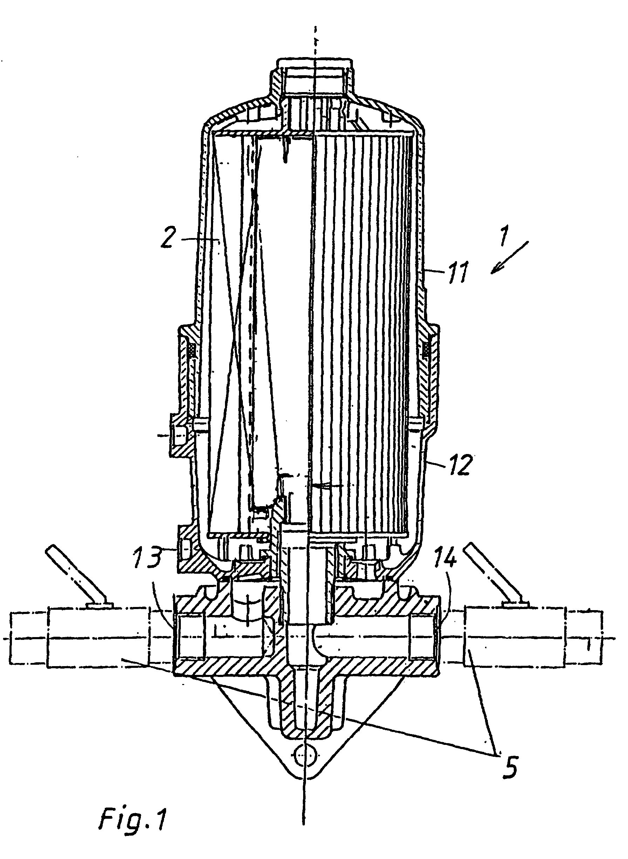

Mit Bezugnahme auf Figur 1 weist das Kühlmittelfilter ein Gehäuse 1 auf, das einen oberen Gehäuseteil 11 beinhaltet, der becherförmig ist und am offenen Rand einen Gewindeabschnitt mit einer Dichtung trägt, und einen unteren Gehäuseteil 12, in dem eine Eintrittsöffnung 13 und eine Austrittsöffnung 14 für das Kühlmittel angebracht sind. Vor der Eintrittsöffnung 13 und der Austrittsöffnung 14 ist jeweils ein Absperrventil 5 angebracht.

Der Aufbau des Gehäuses 1 ist aus bekannten Ausführungen als solcher als bekannt vorauszusetzen und muß an dieser Stelle nicht näher erläutert werden. Im Inneren des Gehäuses 1 befindet sich ein Filtereinsatz 2, welcher zwei Stirnscheiben und einen gefalteten Rand aus beispielsweise Papier aufweist. Der Filtereinsatz 2 wird radial von außen nach innen durchströmt.

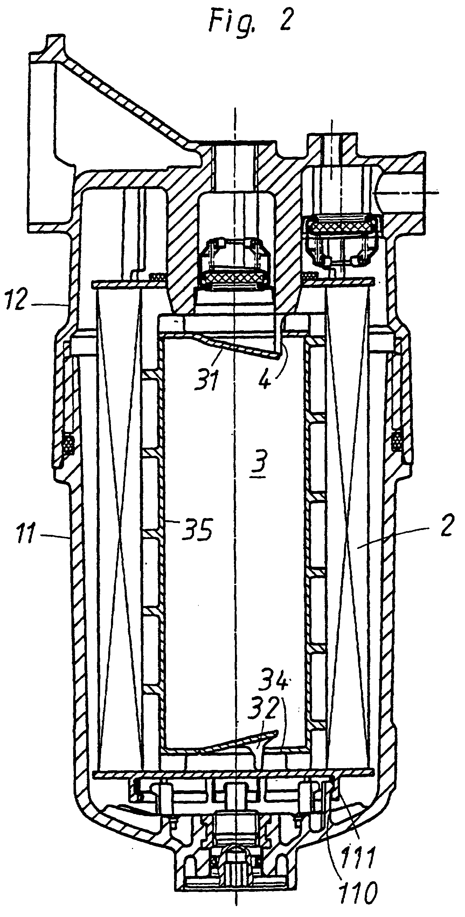

Die Figur 2 zeigt die beiden Gehäuseteile 11 und 12 in zusammengeschraubtem Zustand, wobei eine Kammer 3 im Inneren des Filtereinsatzes 2 bereits geöffnet ist.

Der Filtereinsatz 2 weist an seiner unteren Stirnscheibe Rastmittel 111 auf, die mit Rastmitteln 110 am Gehäuseteil 11 in Eingriff bringbar sind. Diese Verrastung ist als solche bekannt.

Die Kammer 3 ist bei der gezeigten Ausgestaltung mit einem Mantel ausgeführt, der als Stützdom 35 für den Filtereinsatz 2 dient.

An der in der Figur 2 unteren Stirnseite weist die Kammer 3 einen Nocken 32 auf, neben dem eine Sollbruchlinie 34 in der Stirnwand ausgeführt ist. Wie in Figur 2 gezeigt, ist die Sollbruchlinie bereits durch Anstoßen des Nockens 32 beim Ineinanderschrauben der beiden Gehäuseteile 11 und 12 aufgebrochen.

Auch an ihrer in der Figur 2 oberen Stirnseite ist die Kammer 3 bei diesem Vorgang geöffnet worden, wobei ein Dorn 4, der am oberen Gehäuseteil 12 in axialer Richtung vorragend angebracht ist, eine Membran 31 an der oberen Stirnseite der Kammer 3 aufgebrochen hat.

Damit ist die Kammer 3 in axialer Richtung durchströmbar.

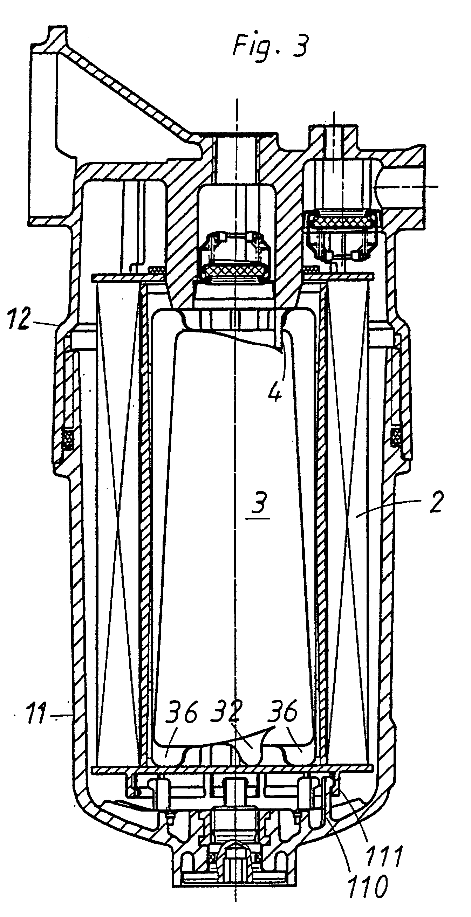

Figur 3 zeigt eine andere Ausgestaltung einer Kammer 3. Bei dieser Ausgestaltung ist die Kammer 3 als eine allseitig geschlossene, in das Innere des Filtereinsatzes 2 einsetzbare Kammer ausgebildet, deren Mantel nicht als Stützdom dient. Beim Ineinanderschrauben der Gehäuseteile 11 und 12 drückt der Nocken 32 gegen die untere Stirnscheibe des Filtereinsatzes 2 und öffnet eine daneben liegende, nicht gekennzeichnete Sollbruchlinie, wodurch die untere Stirnwand der Kammer 3 geöffnet ist. Ebenfalls beim Ineinanderschrauben drückt der Dorn 4, der ähnlich der Ausgestaltung in Figur 2 angeordnet ist, durch eine weitere Sollbruchlinie oder einen dünnen Wandbereich an der unteren Stirnseite der Kammer 3 und öffnet diese.

Die Befestigung mit Rastmitteln 110 und 111 entspricht der Ausführung in der Figur 2.

Beim Einsetzen der Kammer 3 in das Innere des Filtereinsatzes 2 wird dieser in jedem Falle zunächst mit den Rastmitteln 110, 111 am Gehäuseteil 11 befestigt.

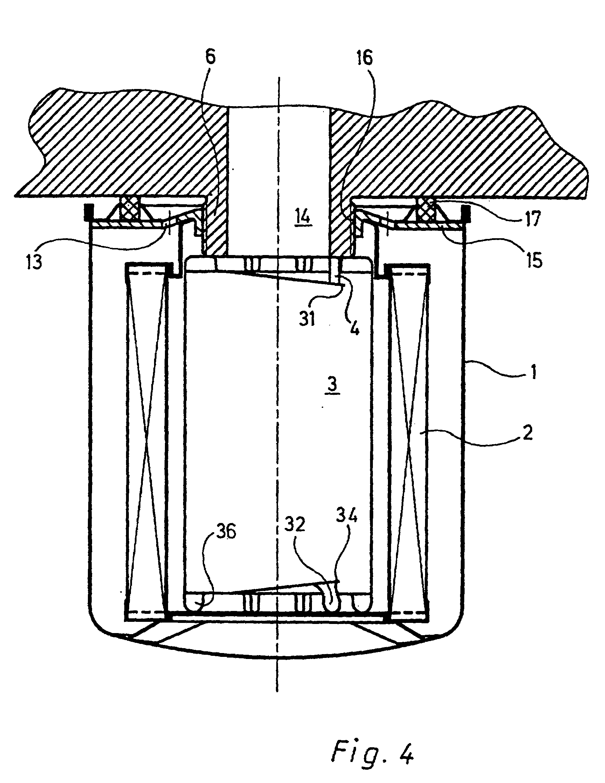

Figur 4 zeigt eine weitere Ausgestaltung des Kühlmittelfilters. Ein becherförmiges Gehäuse 1 beinhaltet einen Filtereinsatz 2. Im Innern des Filtereinsatzes 2 ist eine Kammer 3 eingebracht, die allgemein zylinderförmig ausgebildet ist. An der in der Figur 4 unteren Stirnseite der Kammer 3 ist ein Nocken 32 nahe einer Sollbruchlinie 34 angebracht, und mehrere Vorsprünge 36, deren Höhe jeweils kleiner ist als die Höhe des Nockens 32.

An der gegenüberliegenden Stirnseite der Kammer 3 ist eine Sollbruchlinie 31 angebracht.

Das Gehäuse 1 weist eine Stirnwand 15 auf, die einem nicht bezeichneten Motorgehäuse zugewandt ist, welches in der Figur 4 oben liegt.

Die Stirnwand 15 weist eine zentrale Öffnung 16 mit Innengewinde auf, das auf einen Gewindestutzen 6 im Motorgehäuse mit entsprechendem Außengewinde aufschraubbar ist.

Zentral im Gewindestutzen 6 verläuft die Austrittsöffnung 14 für das gefilterte Medium.

Weiter weist die Stirnwand 15 mehrere Eintrittsöffnungen 13 auf, durch die das zu filternde Medium, hier das Kühlmittel in das Gehäuse 1 eintritt.

Die entsprechenden Zuführungen im Motorgehäuse sind nicht dargestellt, da sie dem Fachmann geläufig sind.

Radial außerhalb der Eintrittsöffnungen 13 ist an der Stirnwand 15 eine Ringdichtung 17 befestigt.

Der Gewindestutzen 6 trägt an seinem freien Ende einen Dorn 4.

Wird nun das Gehäuse 1 mit eingesetzter geschlossener Kammer 3 auf den Gewindestutzen 6 aufgeschraubt, so durchstößt der Dorn 4 die Sollbruchlinie 31, und der Nocken 32 öffnet die Sollbruchlinie 34, so daß die Kammer 3 durchströmbar ist.

Dabei ist das Gehäuse 1 durch die Ringdichtung 17 dichtend mit dem Motorgehäuse verbunden.

## Patentansprüche

1. Kühlmittelfilter mit einem Gehäuse (1), das dichtend mit einem Motorgehäuse verbindbar ist oder das zwei lösbar und dichtend miteinander verbindbare Gehäuseteile (11, 12) aufweist, mit einem allgemein hohlzylinderförmigen Filtereinsatz (2), der radial von außen nach innen von dem zu filternden Kühlmittel durchströmbar ist, wobei das Gehäuse (1) eine Eintrittsöffnung (13) und eine Austrittsöffnung (14) für das Kühlmittel aufweist, wobei im Innenraum des hohlzylinderförmigen Filtereinsatzes (2) eine allseitig mit einer Außenhaut umschlossene Kammer (3) vorhanden ist, die einen Kühlmittelzusatz enthält und die nach dem Verbinden des Gehäuses (1) mit dem Motorgehäuse oder der zwei Gehäuseteile (11, 12) miteinander geöffnet ist,
**dadurch gekennzeichnet,**
- **daß** sich mindestens ein Bereich der Außenhaut der Kammer (3) durch Einwirken mindestens eines mechanischen Öffnungsmittels beim Verbinden des Gehäuses (1) mit dem Motorgehäuse oder der zwei Gehäuseteile (11, 12) miteinander öffnet,
- **daß** das Öffnungsmittel mindestens ein an dem Motorgehäuse oder einem Gehäuseteil (11, 12) angebrachter Dorn (4) ist und
- **daß** der zu öffnende Bereich durch eine Membran (31) gebildet ist, die mit dem mindestens einen Dorn (4) durchdringbar ist.

2. Kühlmittelfilter mit einem Gehäuse (1), das dichtend mit einem Motorgehäuse verbindbar ist oder das zwei lösbar und dichtend miteinander verbindbare Gehäuseteile (11, 12) aufweist, mit einem allgemein hohlzylinderförmigen Filtereinsatz (2), der radial von außen nach innen von dem zu filternden Kühlmittel durchströmbar ist, wobei das Gehäuse (1) eine Eintrittsöffnung (13) und eine Austrittsöffnung (14) für das Kühlmittel aufweist, wobei im Innenraum des hohlzylinderförmigen Filtereinsatzes (2) eine allseitig mit einer Außenhaut umschlossene Kammer (3) vorhanden ist, die einen Kühlmittelzusatz enthält und die nach dem Verbinden des Gehäuses (1) mit dem Motorgehäuse oder der zwei Gehäuseteile (11, 12) miteinander geöffnet ist,
**dadurch gekennzeichnet,**
- **daß** sich mindestens ein Bereich der Außenhaut der Kammer (3) durch Einwirken mindestens eines mechanischen Öffnungsmittels beim Verbinden des Gehäuses (1) mit dem Motorgehäuse oder der zwei Gehäuseteile (11, 12) miteinander öffnet,
- **daß** das Öffnungsmittel mindestens ein nach außen ragender Nocken (32) an einer stirnseitigen Wand der Kammer (3) ist und
- **daß** nahe dem Nocken (32) eine Sollbruchlinie (34) in der stirnseitigen Wand angebracht ist, die beim Eingriff des mindestens einen Nockens (32) mit dem benachbarten Gehäuseteil (11) aufbricht.

3. Kühlmittelfilter mit einem Gehäuse (1), das dichtend mit einem Motorgehäuse verbindbar ist oder das zwei lösbar und dichtend miteinander verbindbare Gehäuseteile (11, 12) aufweist, mit einem allgemein hohlzylinderförmigen Filtereinsatz (2), der radial von außen nach innen von dem zu filternden Kühlmittel durchströmbar ist, wobei das Gehäuse (1) eine Eintrittsöffnung (13) und eine Austrittsöffnung (14) für das Kühlmittel aufweist, wobei im Innenraum des hohlzylinderförmigen Filtereinsatzes (2) eine allseitig mit einer Außenhaut umschlossene Kammer (3) vorhanden ist, die einen Kühlmittelzusatz enthält und die nach dem Verbinden des Gehäuses (1) mit dem Motorgehäuse oder der zwei Gehäuseteile (11, 12) miteinander geöffnet ist,
**dadurch gekennzeichnet,**
- **daß** sich mindestens ein Bereich der Außenhaut der Kammer (3) durch Einwirken mindestens eines mechanischen Öffnungsmittels beim Verbinden des Gehäuses (1) mit dem Motorgehäuse oder der zwei Gehäuseteile (11, 12) miteinander öffnet,
- das das Öffnungsmittel mindestens ein an dem Motorgehäuse oder einem Gehäuseteil (11, 12) angebrachter Dorn (4) und/oder mindestens ein nach außen ragender Nocken (32) an einer stirnseitigen Wand der Kammer (3) ist und
- **daß** eine Wanddicke der Kammer (3) nahe des Dorns (4) oder Nockens (32) reduziert ist.

4. Kühlmittelfilter nach einem der Ansprüche 1 bis 3, **dadurch gekennzeichnet, daß** die Kammer (3) allgemein Zylinderform mit einem Mantel und zwei Stirnseiten aufweist, wobei der Mantel des Zylinders als Stützdom (35) des Filtereinsatzes (2) ausgebildet ist und wobei mindestens eine Stirnseite einen räumlich definiert zu öffnenden Bereich aufweist.

5. Kühlmittelfilter nach einem der Ansprüche 1 bis 3, **dadurch gekennzeichnet, daß** die Kammer (3) allgemein Zylinderform aufweist und in das Innere das Filtereinsatzes (2) einsetzbar ist, wobei mindestens eine ihrer beiden Stirnseiten einen räumlich definiert zu öffnenden Bereich aufweist.

6. Kühlmittelfilter nach einem der vorhergehenden Ansprüche, **dadurch gekennzeichnet, daß** die beiden Gehäuseteile (11, 12) durch ineinander schraubbare Gewindeabschnitte verbindbar sind, wobei das eine Gehäuseteil (11) becherförmig ist und das andere Gehäuseteil (12) die Eintrittsöffnung (13) und die Austrittsöffnung (14) aufweist, daß am Boden des becherförmigen Gehäuseteils (11) Rastmittel (110) angeordnet sind, die mit entsprechenden Rastmitteln (111) an einer Stirnscheibe des Filtereinsatzes (2) verbindbar sind, daß die den Rastmitteln (110, 111) zugewandte Stirnseite der Kammer (3) eine Sollbruchlinie (34) aufweist, nahe der ein nach außen ragender Nocken (32) angeordnet ist, der beim Ineinanderschrauben der Gehäuseteile (11, 12) die Sollbruchlinie (34) öffnet, und daß die den Rastmitteln (110, 111) abgewandte Stirnseite der Kammer (3) eine Membran oder Sollbruchlinie (31) aufweist und beim Ineinanderschrauben der Gehäuseteile (11, 12) mit einem Dorn (4) in Eingriff bringbar ist, der an dem anderen Gehäuseteil (12) angeordnet ist und die Membran oder Sollbruchlinie (31) öffnet.

7. Kühlmittelfilter nach einem der Ansprüche 1 bis 5, **dadurch gekennzeichnet, daß** das Gehäuse (1) becherförmig ist und an einer der Stirnwände (15) eine zentrale Öffnung (16) mit Innengewinde aufweist, das auf einen entsprechenden, die Austrittsöffnung (14) umfassenden Gewindestutzen (6) des Motorgehäuses aufschraubbar ist, daß in der Stirnwand (15) mindestens eine Eintrittsöffnung (13) vorhanden ist, daß an der Stirnwand (15) im Bereich radial außerhalb der mindestens einen Eintrittsöffnung (13) eine Ringdichtung (17) angebracht ist, die nach dem Anschrauben des Gehäuses (1) dichtend am Motorgehäuse anliegt, daß die dem Gewindestutzen (6) abgewandte Stirnseite der Kammer (3) eine Sollbruchlinie (34) aufweist, nahe der ein nach außen ragender Nocken (32) angeordnet ist, der beim Aufschrauben des Gehäuses (1) die Sollbruchlinie (34) öffnet, und daß die andere Stirnseite der Kammer (3) eine Membran oder Sollbruchlinie (31) aufweist und beim Aufschrauben des Gehäuses (1) mit einem Dorn (4) in Eingriff bringbar ist, der an dem Gewindestutzen (6) angeordnet ist und die Membran oder Sollbruchlinie (31) öffnet.

8. Kühlmittelfilter nach einem der Ansprüche 2 bis 7, **dadurch gekennzeichnet, daß** die Kammer (3) an mindestens einer ihrer Stirnseiten abstandsbildende Vorsprünge (36) aufweist, deren Höhe geringer ist als die des Nockens (32).

9. Kühlmittelfilter nach einem der vorhergehenden Ansprüche, **dadurch gekennzeichnet, daß** die Kammer (3) aus Kunststoff ist.

10. Kühlmittelfilter nach einem der Ansprüche 1 und 6 bis 9, **dadurch gekennzeichnet, daß** die Membran (31) eine Kunststoff- oder Metallfolie ist.

11. Kühlmittelfilter nach einem der Ansprüche 1 and 6 bis 10, **dadurch gekennzeichnet, daß** die Membran durch einen verdünnten Bereich der Außenhaut gebildet wird.

## Claims

1. A coolant filter with a casing (1), which can be tightly joined with a motor casing, or has two detachable and tightly joinable casing parts (11, 12), with a generally hollow, cylindrical filter insert (2) through which the coolant to be filtered can radially flow from the outside in, wherein the casing (1) has an inlet (13) and outlet (14) for the coolant, wherein a chamber (3) enveloped on all sides by a outer skin is present inside the hollow, cylindrical filter insert (2), contains a coolant additive and opens concurrently after the casing (1) or the two casing parts (11, 12) have been joined with the casing (1), **characterized by** the fact, that
- at least one area of the outer skin of the chamber (3) opens concurrently through exposure to at least one mechanical opening aid while the casing (1) is joined with the motor casing or the two casing parts (11, 12),
- the opening aid is at least one mandrel (4) secured to motor casing or a casing part (11, 12), and
- the area to be opened is formed by a membrane (31) that can be penetrated with the at least one mandrel (4).

2. The coolant filter with a casing (1), which can be tightly joined with a motor casing, or has two detachable and tightly joinable casing parts (11, 12), with a generally hollow, cylindrical filter insert (2) through which the coolant to be filtered can radially flow from the outside in, wherein the casing (1) has an inlet (13) and outlet (14) for the coolant, wherein a chamber (3) enveloped on all sides by a outer skin is present inside the hollow, cylindrical filter insert (2), contains a coolant additive and opens concurrently after the casing (1) or the two casing parts (11, 12) have been joined with the casing (1), **characterized by** the fact, that
- at least one area of the outer skin of the chamber (3) opens concurrently through exposure to at least one mechanical opening aid while the casing (1) is joined with the motor casing or the two casing parts (11, 12),
- the opening aid is at least one outwardly projecting cam (32) on a front wall of the chamber (3), and
- a set break line (34) is provided in the front wall near the cam (32), which breaks open when the at least one cam (32) engages the adjacent casing part (11).

3. The coolant filter with a casing (1), which can be tightly joined with a motor casing, or has two detachable and tightly joinable casing parts (11, 12), with a generally hollow, cylindrical filter insert (2) through which the coolant to be filtered can radially flow from the outside in, wherein the casing (1) has an inlet (13) and outlet (14) for the coolant, wherein a chamber (3) enveloped on all sides by a outer skin is present inside the hollow, cylindrical filter insert (2), contains a coolant additive and opens concurrently after the casing (1) or the two casing parts (11, 12) have been joined with the casing (1), **characterized by** the fact, that
- at least one area of the outer skin of the chamber (3) opens concurrently through exposure to at least one mechanical opening aid while the casing (1) is joined with the motor casing or the two casing parts (11, 12),
- the opening aid is at least one mandrel (4) secured to motor casing or a casing part (11, 12) and/or at least one outwardly projecting cam (32) on a front wall of the chamber (3), and
- the thickness of one wall of the chamber (3) near the mandrel (4) or cam (32) is reduced.

4. The coolant filter according to one of claims 1 to 3, **characterized by** the fact that the chamber (3) is generally cylindrical with a jacket and two faces, wherein the jacket of the cylinder is designed as a support dome (35) for the filter insert (2), and wherein at least one front side has an area to be opened in a spatially defined manner.

5. The coolant filter according to one of claims 1 to 3, **characterized by** the fact that the chamber (3) is generally cylindrical, and can be placed inside the filter insert (2), wherein at least one of its two front sides has an area to be opened in a spatially defined manner.

6. The coolant filter according to one of the preceding claims, **characterized by** the fact that the two casing parts (11, 12) can be joined by threaded sections that can be screwed into each other, wherein the one casing part (11) is bowl-shaped, and the other casing part (12) has the inlet (13) and outlet (14), that latching means (110) are arranged on the floor of the bowl-shaped casing part (11), which can be joined with corresponding latching means (111) on a front disk of the filter insert (2), that the front side of the chamber (3) facing the latching means (110, 111) has a set break line (34), near which is situated an outwardly projecting cam (32), which opens the set break line (34) when screwing together the casing parts (11, 12), and that the front side of the chamber (3) facing away from the latching means (110, 111) has a membrane or set break line (31) and can be engaged with a mandrel (4) when screwing together the casing parts (11, 12), wherein the mandrel is arranged on the other casing part (12) and opens the membrane or set break line (31).

7. The coolant filter according to one of claims 1 to 5, **characterized by** the fact that the casing (1) is bowl-shaped and has a central hole (16) with female thread on one of the front walls (15), which can be screwed onto a corresponding threaded neck (6) of the motor casing encompassing the outlet (14), that at least one inlet (13) is present in the front wall (15), that an annular seal (17) is attached to the front wall (15) in the area radially outside the at least one inlet (13), and tightly abuts the motor casing after screwing on the casing (1), that the front side of the chamber (3) facing away from the threaded neck (6) has a set break line (34), near which is situated an outwardly projecting cam (32), which opens the set break line (34) when screwing on the casing (1), and that the other front side of the chamber (3) has a membrane or set break line (31) and can be engaged with a mandrel (4) when screwing on the casing (1), wherein the mandrel is situated on the threaded neck (6) and opens the membrane or set break line (31).

8. The coolant filter according to one of claims 2 to 7, **characterized by** the fact that the chamber (3) has spacing projections (36) on at least one of its front sides, whose height is less than that of the cam (32).

9. The coolant filter according to one of the preceding claims, **characterized by** the fact that the chamber is made out of plastic (3).

10. The coolant filter according to one of claims 1 and 6 to 9, **characterized by** the fact that the membrane (31) is a plastic or metal film.

11. The coolant filter according to one of claims 1 and 6 to 10, **characterized by** the fact that a thinned area of the outer skin forms the membrane.

## Revendications

1. Filtre d'agent refroidisseur qui inclut un carter (1), qui peut être connecté de façon étanche à un carter du moteur ou comporte deux éléments (11, 12) de carter qui peuvent être connectés entre eux de façon détachable et étanche, un insert (2) de filtre à configuration générale cylindrique creuse qui peut être parcouru radialement de l'extérieur vers l'intérieur par l'agent refroidisseur à filtrer, dans lequel le carter (1) comporte une ouverture d'entrée (13) et une ouverture de sortie (14) pour l'agent refroidisseur, et dans lequel une chambre (3) fermée de tous côtés par une enveloppe est agencée dans l'espace intérieur de l'insert (2) de filtre en forme de cylindre creux, contient un complément d'agent refroidisseur et est ouverte lorsque le carter (1) a été connecté avec le carter du moteur ou avec les deux éléments (11, 12) de carter,
**caractérisé en ce que**
au moins une zone de l'enveloppe de la chambre (3) s'ouvre par l'effet d'au moins un moyen mécanique d'ouverture lors de la connexion du carter (1) au carter de moteur ou aux deux éléments (11, 12) de carter, **en ce que**
le moyen d'ouverture est au moins un poinçon (4) monté sur le carter de moteur ou sur un élément (11, 12) de carter, et **en ce que**
la zone à ouvrir consiste en une membrane (31) qui peut être percée par le poinçon (4) unique au moins.

2. Filtre d'agent refroidisseur qui inclut un carter (1), qui peut être connecté de façon étanche à un carter du moteur ou comporte deux éléments (11, 12) de carter qui peuvent être connectés entre eux de façon détachable et étanche, un insert (2) de filtre à configuration générale cylindrique creuse qui peut être parcouru radialement de l'extérieur vers l'intérieur par l'agent refroidisseur à filtrer, dans lequel le carter (1) comporte une ouverture d'entrée (13) et une ouverture de sortie (14) pour l'agent refroidisseur, et dans lequel une chambre (3) fermée de tous côtés par une enveloppe est agencée dans l'espace intérieur de l'insert (2) de filtre en forme de cylindre creux, contient un complément d'agent refroidisseur et est ouverte lorsque le carter (1) a été connecté avec le carter du moteur ou avec les deux éléments (11, 12) de carter,
**caractérisé en ce que**
au moins une zone de l'enveloppe de la chambre (3) s'ouvre par l'effet d'au moins un moyen mécanique d'ouverture lors de la connexion du carter (1) au carter de moteur ou aux deux éléments (11, 12) de carter, **en ce que**
le moyen d'ouverture est au moins un taquet (32) en saillie vers l'extérieur sur une paroi de face frontale de la chambre (3) et **en ce que**,
une ligne (34) destinée à la rupture qui se rompt lors du contact du taquet unique au moins (32) avec l'élément voisin (11) de carter est agencée près du taquet (32).

3. Filtre d'agent refroidisseur qui inclut un carter (1), qui peut être connecté de façon étanche à un carter du moteur ou comporte deux éléments (11, 12) de carter qui peuvent être connectés entre eux de façon détachable et étanche, un insert (2) de filtre à configuration générale cylindrique creuse qui peut être parcouru radialement de l'extérieur vers l'intérieur par l'agent refroidisseur à filtrer, dans lequel le carter (1) comporte une ouverture d'entrée (13) et une ouverture de sortie (14) pour l'agent refroidisseur, et dans lequel une chambre (3) fermée de tous côtés par une enveloppe est agencée dans l'espace intérieur de l'insert (2) de filtre en forme de cylindre creux, contient un complément d'agent refroidisseur et est ouverte lorsque le carter (1) a été connecté avec le carter du moteur ou avec les deux éléments (11, 12) de carter,
**caractérisé en ce que**
au moins une zone de l'enveloppe de la chambre (3) s'ouvre par l'effet d'au moins un moyen mécanique d'ouverture lors de la connexion du carter (1) au carter de moteur ou aux deux éléments (11, 12) de carter, **en ce que**
le moyen d'ouverture est au moins un poinçon (4) monté sur le carter de moteur ou sur un élément (11, 12) de carter et/ou au moins au moins un taquet (32) en saillie vers l'extérieur sur une paroi de face frontale de la chambre (3), et **en ce que**
une épaisseur de paroi de la chambre (3) est réduite près du poinçon (4) ou du taquet (32).

4. Filtre d'agent refroidisseur selon l'une quelconque des revendications 1 à 3, **caractérisé en ce que** la chambre (3) est d'une forme généralement cylindrique comprenant une virole et deux faces frontales, où la virole du cylindre constitue un dôme de protection (35) de l'insert (2) de filtre et au moins une face frontale comporte une zone à ouvrir de façon définie dans l'espace.

5. Filtre d'agent refroidisseur selon l'une quelconque des revendications 1 à 3, **caractérisé en ce que** la chambre (3) est de configuration généralement cylindrique et peut être insérée dans l'intérieur de l'insert (2) de filtre, au moins l'une des deux faces frontales comportant une zone à ouvrir de façon définie dans l'espace.

6. Filtre d'agent refroidisseur selon l'une quelconque des revendications précédentes, **caractérisé en ce que** les deux éléments (11, 12) de carter peuvent être connectés au moyen de parties filetées vissables l'une dans l'autre, l'un des éléments (11) de carter est en forme de godet et l'autre élément (12) de carter comporte l'ouverture d'entrée (13) et l'ouverture de sortie (14), **en ce que** le fond de l'élément (11) de carter en forme de godet comporte des moyens d'encliquetage (110) qui peuvent être connectés avec des moyens d'encliquetage correspondants (111) agencés sur un disque frontal de l'insert (2) de filtre, **en ce que** la face frontale de la chambre (3) tournée vers les moyens d'encliquetage (110, 111) comporte une ligne (34) destinée à la rupture près de laquelle est agencé un taquet (32) en saillie vers l'extérieur qui ouvre la ligne (34) destinée à la rupture lorsque les éléments (11, 12) de carter sont vissés l'un dans l'autre, et **en ce que** la face frontale de la chambre (3) opposée aux moyens d'encliquetage (110, 111) comporte une membrane ou une ligne (31) destinée à la rupture et peut être amenée, lors du vissage des éléments (11, 12) de carter l'un dans l'autre, au contact d'un poinçon (4) qui est agencé sur l'autre élément (12) de carter et ouvre la membrane ou la ligne (31) destinée à la rupture.

7. Filtre pour agent refroidisseur selon l'une quelconque des revendications 1 à 5, **caractérisé en ce que** le carter (1) est en forme de godet et comporte, sur l'une des parois frontales (15) une ouverture centrale (16) à filet intérieur qui peut être vissé sur un piquage fileté correspondant (6) du carter de moteur qui entoure l'ouverture de sortie (14), **en ce qu'**au moins une ouverture d'entrée (13) est ménagée dans la paroi frontale (15), **en ce qu'**un joint d'étanchéité annulaire (17) est monté sur la paroi frontale (15) dans la zone située radialement à l'extérieur de l'ouverture d'entrée (13) unique au moins et repose de façon étanche sur le carter du moteur après vissage du carter (1), **en ce que** la face frontale de la chambre (3) opposée au piquage fileté (6) comporte une ligne (34) destinée à la rupture près de laquelle est agencé un taquet (32) en saillie vers l'extérieur qui ouvre lors du vissage du carter (1) la ligne (34) destinée à la rupture, et **en ce que** l'autre face frontale de la chambre (3) comporte une membrane ou une ligne (31) destinée à la rupture et peut être amenée, lors du vissage du carter (1), au contact d'un poinçon (4) qui est agencé sur le piquage fileté (6) et qui ouvre la membrane ou la ligne (31) destinée à la rupture.

8. Filtre pour agent refroidisseur selon l'une quelconque des revendications 2 à 7, **caractérisé en ce que** la chambre (3) comporte, au moins sur l'une de ses faces frontales, des saillies (36) qui forment entretoise et dont la hauteur est inférieure à celle du taquet (32).

9. Filtre pour agent refroidisseur selon l'une quelconque des revendications précédentes, **caractérisé en ce que** la chambre (3) est en matière plastique.

10. Filtre pour agent refroidisseur selon l'une quelconque des revendications 1 et 6 à 9, **caractérisé en ce que** la membrane (31) est une feuille de matière plastique ou de métal.

11. Filtre pour agent refroidisseur selon l'une quelconque des revendications 1 et 6 à 10, **caractérisé en ce que** la membrane consiste en une zone amincie de l'enveloppe.
